# FASCICULE DE BREVET EUROPEEN

(11) **EP 3 148 307 B1**
(45) Date de publication et mention de la délivrance du brevet: **11.10.2023**
(21) Numéro de dépôt: 15726227.0
(22) Date de dépôt: 18.05.2015
(51) Int. Cl.: A01C 1/06

(54) **PROCEDE DE TRAITEMENT DE SEMENCES**
VERFAHREN ZUR BEHANDLUNG VON SAATGUT
METHOD FOR TREATING SEEDS

(30) Priorité: 26.05.2014 FR 1401196
(43) Date de publication de la demande: 05.04.2017
(73) Titulaire: RHODIA OPERATIONS, 69003 Lyon (FR)
(72) Inventeur: SAINSARD, Hubert, 27400 Montaure (FR); DE LAAT, Jeremy, 75004 Paris (FR); CASTAING, Jean-Christophe, 92310 Sèvres (FR); ABRIBAT, Benoît, 77310 Saint Fargeau Ponthierry (FR)
(74) Mandataire: Delenne, Marc
(86) Numéro de dépôt international: PCT/FR2015/000101
(87) Numéro de publication internationale: WO 2015/181453

(56) Documents cités:
- WO-A1-2006/131213
- WO-A2-2011/045004
- US-A- 4 149 869

## Description

### DOMAINE TECHNIQUE

Le présent exposé concerne un procédé de traitement de semences. Ce procédé peut être utilisé, en particulier, pour enrober des graines.

### ARRIERE PLAN

Dans le domaine de l'agriculture, il est connu de traiter les semences pour pouvoir les manipuler plus facilement, améliorer l'environnement dans lequel elles vont se développer ou leur propriétés germinatives, ou pour les protéger, par exemple vis-à-vis des nuisibles, de la moisissure ou contre leur détérioration au cours du vieillissement. Pour ce faire, différents procédés de traitement existent, comme le traitement de surface simple (en anglais "seed dressing"), le pelliculage ("seed coating") ou l'enrobage des semences ("seed pelletizing").

Le pelliculage consiste en général à déposer à la surface des semences une fine pellicule de polymère dans laquelle sont incluses différentes substances agrochimiques. La forme et la dimension des semences au cours de ce procédé ne sont que peu modifiées.

L'enrobage consiste en général à modifier la taille et la forme des semences par un apport important de matière inerte, par exemple pour faciliter l'utilisation de semoirs mécaniques classiques qui ont du mal à être utilisés avec des semences trop petites. Plusieurs substances phytosanitaires peuvent être ainsi localisées plus précisément dans les différentes strates de l'enrobage.

Classiquement, les formulations de traitement utilisées (en particulier pour le pelliculage) sont composées :
- de formulations liquides comprenant typiquement un fongicide en dispersion dans l'eau, des pigments et des polymères liants (en anglais "binders"), et
- de formulations en poudre, permettant d'accélérer le séchage, diminuer l'adhésivité et améliorer la fluence des graines.

Typiquement, les formulations liquides sont appliquées sur les semences par des procédés tels que la pulvérisation, la pulvérisation-séchage, le malaxage, le barattage ou tout autre moyen bien connu de l'homme du métier.

Dans le cas des formulations en poudre, l'adhésion de la formulation sur les semences se fait par ajout d'eau.

Plus précisément, la méthode la plus couramment employée consiste à pré-mélanger la poudre et l'eau de sorte à obtenir une dispersion, qui est elle-même ensuite appliquée sur les semences. Alternativement, on peut procéder comme suit : soit les semences sont mouillées et la poudre est ajoutée ensuite sur les semences, soit la poudre est mélangée avec les semences et l'eau est ajoutée ensuite.

Certains composés de traitement restent cependant difficiles à appliquer sur les semences. C'est le cas, notamment, des composés hydratables développant une viscosité importante au contact de l'eau et que l'on souhaite utiliser dans une proportion significative. Typiquement, sur les semences de grande culture, la proportion visée est comprise entre 0,1% et 1%, cette proportion correspondant à la masse du traitement sec, après élimination de l'eau, sur la masse de semence.

Dans le cas d'une formulation liquide, ces composés hydratables engendrent une viscosité trop élevée pour pouvoir manipuler et appliquer la formulation dans des conditions usuelles. Des procédés pour l'enrobage de semences de cette manière sont connus de WO2006/121213, WO2011/045004 et US 4 149 869.

L'option consistant à diluer la formulation (pour diminuer la concentration du composé et, ainsi, limiter la viscosité de la formulation) n'est, par ailleurs, pas satisfaisante. En effet, cette option conduirait à introduire une quantité d'eau importante par rapport à la masse de semences traitées. Or, la quantité d'eau est bornée par une valeur maximale acceptable par les semences (en l'absence de séchage, ce qui est la règle pour les semences de grandes cultures). Au-delà de ce seuil acceptable, la semence peut germer au stockage spontanément ou bien perdre rapidement sa capacité germinative après quelques temps de stockage, ou l'eau peut provoquer un gonflement de la graine qui ne reprend sa forme initiale que très lentement, ces variations de volume pouvant entraîner un effritement, voir un craquellement du film d'enrobage ou de pelliculage, ou encore provoquer des agglomérats de semences pelliculées. L'option consistant à diluer la formulation ne serait donc satisfaisante qu'à la condition de semer les semences juste après le traitement, ce qui n'est pas envisageable pour les semences de grande culture du fait que ces semences représentent de grands volumes.

Dans le cas d'une formulation en poudre, on a pu constater que les composés hydratables précités engendraient des problèmes d'inhomogénéité de traitement des semences, et des résidus engendrant à leur tour des problèmes de perte de matière et d'encrassement des appareils de mélange.

Il existe donc un besoin pour un nouveau procédé de traitement permettant d'appliquer sur des semences, des composés hydratables dans une proportion significative.

Il existe également un besoin pour un procédé de traitement qui soit aisé à mettre en oeuvre à l'échelle industrielle et à un coût raisonnable.

### PRESENTATION GENERALE

Le présent exposé concerne un procédé de traitement de semences. Dans la présente demande, par "semence(s)" on entend désigner tout organe ou fragment d'un végétal que l'on met dans un milieu de culture (généralement de la terre) afin de permettre la formation d'un autre végétal de même nature. Il peut notamment s'agir d'une graine. Une semence peut être formée d'un tel organe ou fragment de végétal aggloméré avec d'autres substances ou de plusieurs organes ou fragments agglomérés entre eux. En outre, la semence à laquelle le procédé de traitement est appliqué peut avoir subi préalablement un autre traitement. En particulier, cette semence peut déjà avoir été traitée et, par exemple, être recouverte d'une ou plusieurs couches de revêtement. A l'inverse, cette semence peut être à l'état naturel.

Selon l'invention, les besoins mentionnés ci-dessus sont satisfaits par un procédé selon la revendication 1.

Par "milieu aqueux" on entend désigner un milieu comprenant comme solvant de l'eau.

Par "dispersion", on entend désigner un système hétérogène dans lequel une matière finement divisée, ici le composé hydratable, est répartie dans une autre matière, ici le milieu aqueux. Dans le cas présent, pour obtenir une répartition uniforme du composé hydratable dans le milieu aqueux, on peut utiliser un dispositif d'agitation. Par exemple, il peut s'agir d'un disque dissolveur, d'une hélice quatre pâles, d'un homogénéiseur de type rotor-stator, ou de tout autre type d'homogénéiseur, de mélangeur ou d'agitateur approprié.

Par "composé hydratable" on entend désigner un composé, par exemple un polymère, qui, lorsqu'il est mis en dispersion dans de l'eau distillée à 25°C, sous agitation pendant 2 heures, à une concentration pouvant aller jusqu'à 5% en poids, par rapport au poids total de la dispersion, conduit en moins de 48h sous légère agitation, par hydratation, à une formulation présentant une viscosité (mesurée par un Rheomat RM300 à 25°C, à un taux de cisaillement de 10s⁻¹) supérieure à 8000 cP. En ce sens, on considère que des formulations pour lesquelles aucune mesure de la viscosité n'est possible (cas, par exemple, des formulations totalement gélifiées) présentent une viscosité (mesurée par un Rheomat RM300 à 25°C, à un taux de cisaillement de 10s⁻¹) supérieure à 8000 cP.

Pour cette mesure, la valeur du pH de la dispersion peut être ajustée afin d'améliorer les conditions d'hydratation du composé hydratable. La valeur du pH peut ainsi varier typiquement de 3 à 12, notamment de 5 à 10, en fonction du composé hydratable considéré, les gammes de pH appropriées pour chaque type de composé hydratable étant connues de l'homme du métier.

Le composé hydratable peut être présent dans la dispersion à une concentration maximum de 70 % en poids, par rapport au poids de la dispersion. Avantageusement, cette concentration peut être comprise entre 4,5 et 70% en poids, par exemple entre 5 et 65% en poids, voire entre 7,5 et 65% en poids, notamment entre 10 et 60% en poids.

Selon un mode de réalisation, cette étape de mise en contact est effectuée avant que la viscosité de la dispersion (mesurée à 25°C à un taux de cisaillement de 10s⁻¹ par un Rheomat RM300) n'atteigne une valeur maximum. Cette valeur maximum peut être supérieure ou égale à 10000 cP (centipoises), soit 10000 mPa·s. (milli pascal-secondes), notamment supérieure ou égale à 50000 cP , soit 50000 mPa·s. L'étape de mise en contact peut ainsi être effectuée avant que la viscosité de la dispersion (mesurée à 25°C à un taux de cisaillement de 10s⁻¹ par un Rheomat RM300) n'atteigne une valeur maximum de 50000 mPa·s.

Selon l'invention, comme la viscosité de la dispersion augmente rapidement avec le temps, l'étape de mise en contact de la dispersion avec les semences est effectuée au plus tard 180 s (secondes), par exemple au plus tard 120 s, de préférence au plus tard 60 s, avantageusement au plus tard 30 s, après que le composé hydratable ait été mis en contact avec le milieu aqueux.

Lorsque le procédé de l'invention est intégré à une chaîne de traitements de semences imposant une cadence de durée inférieure à la durée précitée, l'utilisation de plusieurs dispositifs parallèles permettant la mise en oeuvre du procédé de l'invention de façon séquencée peut permettre de s'adapter à la cadence imposée.. L'invention s'étend bien entendu à ces modes de réalisation.

Par exemple, si la cadence imposée par la chaîne de traitements de semences est de 30 s et que l'étape de mise en contact de la dispersion selon l'invention avec les semences doit être effectuée environ 180 s après que le composé hydratable ait été mis en contact avec le milieu aqueux, alors la mise en oeuvre de 6 dispositifs parallèles permettant chacun la mise en oeuvre du procédé de l'invention, et leur fonctionnement en séquençage, permet d'atteindre une cadence de 30s.

Selon l'invention, ledit composé hydratable est choisi parmi les galactomannanes et leur dérivés.

Pas selon l'invention et à titre illustratif, le composé hydratable peut être choisi parmi les composés suivants: une cellulose ou un de ses dérivés, par exemple hydroxycellulose, alkylcellulose, tel que méthylcellulose, hydroxyalkylcellulose tel que hydroxyéthylcellulose, ou hydroxypropylcellulose, hydroxypropylméthylcellulose, carboxyalkylcellulose, tel que carboxyméthylhydroxyéthylcellulose, carboxyméthylcellulose sodique, des polymères synthétiques tels que polyvinylpyridine, polyvinylpyrrolidone, polyéthylène glycol, oxyde de polyéthylène, polyamide, polyacrylamide, acide polyméthacrylique, alcool polyvinylique, polyglycérol, polytétrahydrofuranne, acide polyacrylique, polyacrylate, l'acide alginique et ses dérivés, tel que l'alginate, la pectine, les galactomannanes et leurs dérivés, tel que la gomme de guar, la gomme de guar hydroxypropylée, le carboxyméthyl-guar, le carboxyméthylhydroxypropyl-guar, les guars cationiques, gélatine, l'amidon et ses dérivés, tel que amidon cationique, amidon de maïs, amidon de blé, amidon de riz, amidon de pomme de terre, tapioca, maïs cireux, sorgho, sorgho cireux, dextrine, chitine, chitosan, gomme de xanthane, gomme de carraghénane, gomme karaya, un dérivé de l'un quelconque des composés précités, ou une combinaison de ces composés.

Selon un autre exemple pas revendiqué, le composé hydratable est choisi parmi les celluloses et leurs dérivés.

Selon un autre exemple pas revendiqué, le composé hydratable est choisi parmi les polyacrylamides et leurs dérivés.

Selon un autre exemple pas revendiqué, le composé hydratable est choisi parmi l'amidon et ses dérivés.

Selon un autre exemple pas revendiqué, le composé hydratable est choisi parmi la gomme de xanthane et ses dérivés.

On notera que la dispersion peut comprendre d'autres composés que le composé hydratable comme, par exemple, des pesticides, des fongicides, des herbicides, des molluscides, des bactéricides, des bactériostatiques, des produits à effet répulsif, des nutriments, des engrais, des stabilisateurs de croissance, des latexes (par exemple choisis parmi des polymères de type acétates de vinyle, polyuréthanes, styrène butadiène ou acryliques, éventuellement sous la forme de structures coeur/écorce (ou « core-shell »)), des tensioactifs, des antioxydants, des plastifiants, des colorants, des charges (par exemple une poudre de fluence (ou poudre siccative) de type silice (notamment silices précipitées ou pyrogénées), kaolin ou talc), des additifs biologiques (par exemple des inoculants du type bactéries ou champignons (notamment mycorhiziens)) ou un mélange de ceux-ci. Ces composés additionnels peuvent être ajoutés dans des quantités classiquement utilisées par l'homme du métier. A titre exemple, les latexes peuvent être typiquement introduits en des teneurs allant de 2 à 60 g (en extrait sec), notamment de 3 à 30 g (en extrait sec) par quintal de semence à traiter.

Le procédé proposé permet d'obtenir une bonne répartition de la dispersion sur les semences. Ce procédé est utilisable pour le pelliculage de semences et, notamment, le pelliculage de graines.

Lorsque la dispersion recouvre une semence, elle a une influence positive sur le développement de cette semence. Il semble que la dispersion permette de maintenir la semence qu'elle recouvre dans un environnement humide, favorable au développement de la semence. Cette influence positive n'est toutefois constatée que si la concentration de composé hydratable dans la dispersion est assez importante et, en particulier, dépasse la concentration minimum précitée.

Une concentration importante de composé hydratable a cependant pour inconvénient d'augmenter la viscosité de la dispersion. En pratique, après ajout du composé hydratable dans le milieu aqueux, la viscosité de la dispersion augmente très rapidement. Le fait de mettre en contact le composé hydratable et les semences avant que la viscosité de la dispersion n'atteigne la valeur maximum précitée et/ou dans un certain laps de temps, permet de limiter, voire d'éviter, la formation d'agrégats. De tels agrégats sont indésirables car la quantité de dispersion agglutinée en agrégats est inutile au traitement des semences et constitue une perte. Inversement, s'il y a peu ou s'il n'y a pas d'agrégats, on obtient un traitement plus homogène: la dispersion est mieux répartie sur les semences et chaque semence est mieux recouverte par la dispersion. En limitant ou en évitant la formation d'agrégats, on diminue également le risque d'encrassement de l'appareillage utilisé et, notamment, le risque d'encrassement du bol de mélange dans lequel la dispersion est mélangée aux semences.

Selon un mode de réalisation, la masse de dispersion mise en contact avec les semences peut être comprise entre 0,5 et 10% de la masse des semences.

Dans certains modes de réalisation, la masse de dispersion mise en contact avec les semences est supérieure ou égale à 0,5% de la masse des semences. En-deçà de cette valeur minimum de 0,5%, la quantité de dispersion par semence et, donc, l'effet de la dispersion sur les semences peut ne pas être suffisant. Typiquement, la masse de dispersion mise en contact avec les semences peut être supérieure ou égale à 0,75% de la masse des semences, notamment supérieure ou égale à 1% de la masse des semences.

Par ailleurs, la masse de dispersion mise en contact avec les semences est typiquement inférieure ou égale à 10% de la masse des semences, notamment inférieure ou égale à 8%, en particulier inférieure ou égale à 6%. Au-delà de cette valeur maximum, un effet de saturation peut être constaté. En d'autres termes, la masse de dispersion en excès n'a pas ou peu d'effet et constitue une perte. Egalement, au-delà d'un rapport de 10% entre la masse de la dispersion et la masse de semence, notamment au-delà de 8%, en particulier au-delà de 6%, il existe un risque que la quantité d'eau dans la dispersion dépasse le seuil acceptable par la semence. Au-delà de ce seuil acceptable, la semence peut germer au stockage spontanément, ou bien perdre rapidement sa capacité germinative après quelques temps de stockage.

Avantageusement, la mise en oeuvre du procédé de traitement de l'invention ne provoque pas une hydratation excessive des semences. En outre, la mise en oeuvre du procédé de traitement de l'invention ne modifie pas le pouvoir germinatif des semences.

Les rapports massiques minimaux et maximaux entre la masse de la dispersion et la masse de semence peuvent varier entre les gammes précitées en fonction d'une part de la nature de la semence et d'autre part de la nature du composé hydratable.

Outre les caractéristiques qui viennent d'être mentionnées plus haut, le procédé proposé peut présenter une ou plusieurs des caractéristiques parmi les suivantes, considérées individuellement ou selon des combinaisons techniquement possibles:
- Lors de sa mise en contact avec les semences, le composé hydratable doit déjà être au moins partiellement hydraté. Cette hydratation partielle permet d'améliorer sa capacité d'adhésion sur la semence. Avantageusement, le procédé de l'invention ne nécessite pas l'introduction de solutions adhésives additionnelles pour assurer l'adhésion du composé hydratable sur la semence.
- Comme indiqué précédemment, la concentration du composé hydratable est comprise entre 4,5 et 70% en poids, en particulier entre 5 et 65% en poids, par rapport au poids de la dispersion. Cette concentration peut être notamment comprise entre 10 et 45% en poids, en particulier entre 15 et 35% en poids. Ces plages de concentration permettent d'obtenir un bon compromis, pour la plupart des composés hydratables, entre la cinétique de montée en viscosité observée et la quantité de composé et d'eau dans la dispersion.
- Optionnellement, une étape de séchage peut être mise en oeuvre à l'issue du procédé de l'invention pour réduire la quantité d'eau apportée par la dispersion. Ce séchage peut se faire par exemple par chauffage à une température modérée, par exemple de 20 à 40°C, pendant quelques minutes à quelques heures, de manière que le gain en humidité des semences résultant du procédé de l'invention n'excède pas 3% en poids environ, de préférence 2% en poids environ.

Avantageusement, le procédé de l'invention ne comprend pas d'étape additionnelle de séchage.

Le procédé de traitement de semences proposé présente également l'avantage d'être exploitable à une échelle industrielle, c'est-à-dire d'être mis en oeuvre pour traiter d'importantes quantité de semences, à des cadences de traitement élevées. Par exemple, les semences peuvent être traitées par fournées ou "batchs" de 10 kg, et un cycle de traitement d'une fournée dans l'appareil de pelliculage peut durer moins de 1 min. En outre, le procédé proposé peut être intégré à une chaîne de traitement de semences. En d'autres termes, ce procédé peut être mise en oeuvre sur des semences antérieurement ou postérieurement à une ou plusieurs autres étapes de traitement de ces semences.

L'invention concerne également les semences traitées, en particulier les semences pelliculées, obtenues selon le procédé décrit précédemment.

Les caractéristiques et avantages précités, ainsi que d'autres, apparaîtront à la lecture de la description détaillée qui suit, d'exemple(s) de réalisation du procédé proposé.

### DESCRIPTION DETAILLEE D'EXEMPLE(S)

Un exemple de réalisation est décrit en détail ci-après. Cet exemple illustre les caractéristiques et les avantages de l'invention. Il est toutefois rappelé que l'invention ne se limite pas à cet exemple.

Des tests visant à appliquer sur des graines de soja, un composé hydratable au sens de l'invention, à savoir un agropolymère d'origine naturelle commercialisé sous la marque AgRHO GSB 30 par la société SOLVAY, ont été réalisés. Ces tests sont décrits ci-dessous.

Le procédé selon l'invention (Test A) est comparé avec deux procédés alternatifs utilisant le composé hydratable sous forme de poudre, pour éviter que ne se développe une viscosité trop élevée avant l'application sur la semence.

De manière plus précise :
le procédé alternatif illustré au Test B consiste à appliquer la poudre du composé hydratable sur des graines préalablement humidifiées pour en favoriser l'adhésion.
- le procédé alternatif illustré au Test C consiste à pré-mélanger les semences et la poudre du composé hydratable, puis à appliquer de l'eau pour en favoriser l'adhésion.

Dans tous ces exemples, le dosage cible de composé hydratable par rapport à la masse des graines est de 200 g/quintal.

Par ailleurs, une limite supérieure de 800 g d'eau/quintal de semences est imposée, afin d'éviter tout vieillissement prématuré du lot de semence au stockage.

Le premier test ou test A (conforme à l'invention), a consisté à réaliser les opérations suivantes, dans l'ordre indiqué:
1. 100 grammes de graines de soja sont chargées dans une machine de traitement de semences de laboratoire (modèle NoroGard R150).
2. 0,50 gramme de AgRHO GSB 30 est mélangé avec 2,0 grammes d'eau déminéralisée pendant 1 minute.
3. 1 gramme du mélange obtenu à l'étape2) est injecté dans la machine de traitement de semences 10 secondes après la mise en rotation des semences
4. La rotation des semences est arrêtée après 35 secondes
5. Les semences sont déchargées

Le deuxième test, noté test B (comparatif), a consisté à réaliser les opérations suivantes, dans l'ordre indiqué:
1. 100 grammes de graines de soja sont chargées dans une machine de traitement de semences de laboratoire (modèle NoroGard RI 50).
2. 0,8 g d'eau désionisée sont injectés dans la machine de traitement de semences 5 secondes après la mise en rotation des semences
3. 0,20 gramme de AgRHO GSB 30 sont introduits dans la machine de traitement de semences sous forme de poudre sèche 10 secondes après la mise en rotation des semences
4. La rotation des semences est arrêtée après 35 secondes
5. Les semences sont déchargées.

Le troisième test, noté test C (comparatif), a consisté à réaliser les opérations suivantes, dans l'ordre indiqué:
1. 100 grammes de graines de soja sont chargées dans une machine de traitement de semences de laboratoire (modèle NoroGard R150).
2. 0,20 gramme de AgRHO GSB 30 sont introduits dans la machine de traitement de semences sous forme de poudre sèche avant la mise en rotation des semences 2. 0,8 g d'eau désionisée sont injectés dans la machine de traitement de semences 10 secondes après la mise en rotation des semences
4. La rotation des semences est arrêtée après 35 secondes
5. Les semences sont déchargées

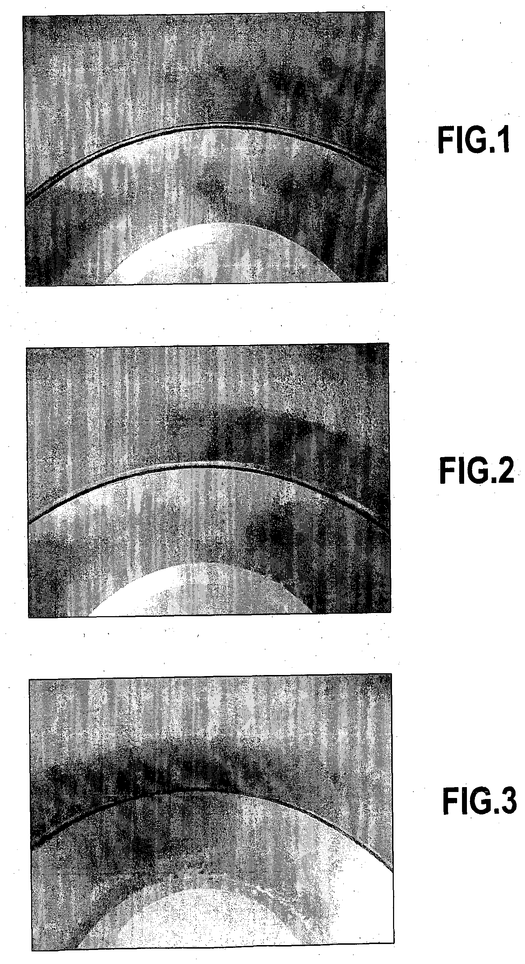

Les photos des FIGS 1 à 3 annexées ont été prises après la dernière étape des tests A à C, respectivement. Ces photos montrent toutes les trois une partie du bol mélangeur, située à la jonction entre le fond et la paroi latérale de ce bol.

Comme on peut le voir sur la photo de la FIG 2, correspondant au test B, une quantité importante de poudre est restée collée sur la paroi latérale du bol, et une quantité (moins importante) de poudre est restée collée au fond du bol mélangeur. Sur la photo de la FIG 3, correspondant au test C, on peut voir qu'une certaine quantité de poudre est restée collée au fond du bol mélangeur. Ces taux de résidus et de dépôts sont inacceptables dans la perspective d'un traitement par lots répété à l'échelle industrielle.

Par contraste avec les photos des FIGS 2 et 3, la photo de FIG 1 montre qu'à l'issue du test A, la paroi latérale et le fond du bol sont nets, i.e. sans résidus de poudre.

Ces tests illustrent les avantages du procédé de l'invention, exemplifié par le test A, par rapport aux tests comparatifs B et C. En particulier, on constate que le procédé de l'invention permet de limiter les pertes de matière et de diminuer le risque d'encrassement du bol de mélange. A une échelle industrielle, ce dernier aspect est d'autant plus important que plusieurs fournées de graines doivent être traitées successivement, à une cadence élevée qui exclut la possibilité de nettoyer les appareils de mélange entre deux fournées. Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Procédé de traitement, en particulier de pelliculage, de semences, comprenant au moins :
- une étape de mise en dispersion, dans un milieu aqueux, d'un composé hydratable, le composé hydratable étant présent dans la dispersion en une concentration d'au moins 4,5 % en poids, par rapport au poids total de la dispersion, et
- une étape de mise en contact de la dispersion ainsi obtenue avec des semences,
**caractérisé en ce que** l'étape de mise en contact de la dispersion avec les semences étant effectuée au plus tard 180s après que le composé hydratable ait été mis en contact avec le milieu aqueux, et **en ce que** ledit composé hydratable étant choisi parmi les galactomannanes et leurs dérivés.

2. Procédé selon la revendication 1, dans lequel l'étape de mise en contact est effectuée avant que la viscosité de la dispersion n'atteigne une valeur maximum de 50000 mPa·s.

3. Procédé selon l'une quelconque des revendications précédentes, dans lequel la concentration du composé hydratable est comprise entre 4,5 et 70% en poids, en particulier entre 5 et 65% en poids, notamment entre 7,5 et 65% en poids, par rapport au poids total de la dispersion.

4. Procédé selon l'une quelconque des revendications précédentes, dans lequel la masse de dispersion mise en contact avec les semences est comprise entre 0,5 et 10% de la masse des semences.

5. Semences traitées, en particulier semences pelliculées, obtenues selon le procédé de l'une quelconque des revendications 1 à 4.

## Patentansprüche

1. Verfahren zur Behandlung, insbesondere zum Beschichten, von Saatgut, das mindestens Folgendes umfasst:
- einen Schritt des Dispergierens einer hydratisierbaren Verbindung in einem wässrigen Medium, wobei die hydratisierbare Verbindung in der Dispersion in einer Konzentration von mindestens 4,5 Gew.-%, bezogen auf das Gesamtgewicht der Dispersion, vorliegt, und
- einen Schritt des Inkontaktbringens der so erhaltenen Dispersion mit dem Saatgut,
**dadurch gekennzeichnet, dass**
der Schritt des Inkontaktbringens der Dispersion mit dem Saatgut spätestens 180 s nach dem Inkontaktbringen der hydratisierbaren Verbindung mit den wässrigen Medium durchgeführt wird und dass die hydratisierbare Verbindung aus Galactomannanen und Derivaten davon ausgewählt wird.

2. Verfahren nach Anspruch 1, wobei der Schritt des Inkontaktbringens durchgeführt wird, bevor die Viskosität der Dispersion eines Maximalwert von 50.000 mPa·s erreicht.

3. Verfahren nach einem der vorhergehenden Ansprüche, wobei die Konzentration der hydratisierbaren Verbindung zwischen 4,75 Gew.-%, speziell zwischen 5 und 65 Gew.-%, insbesondere zwischen 7,5 und 65 Gew.-%, bezogen auf das Gesamtgewicht der Dispersion, liegt.

4. Verfahren nach einem der vorhergehenden Ansprüche, wobei die Masse der mit dem Saatgut in Kontakt gebracht Dispersion zwischen 0,5 und 10 % der Masse des Saatguts liegt.

5. Behandeltes Saatgut, insbesondere beschichtetes Saatgut, erhalten nach dem Verfahren eines der Ansprüche 1 bis 4.

## Claims

1. Process for treating, in particular for coating, seeds, comprising at least:
- a step of dispersing, in an aqueous medium, a hydratable compound, the hydratable compound being present in the dispersion at a concentration of at least 4.5% by weight relative to the total weight of the dispersion, and
- a step of bringing the dispersion thus obtained into contact with seeds,
**characterized in that**
the step of bringing the dispersion into contact with the seeds is carried out at the latest 180 s after the hydratable compound has been brought into contact with the aqueous medium,
and **in that**
said hydratable compound is chosen from galactomannans and derivatives thereof.

2. Process according to Claim 1, in which the step of bringing into contact is carried out before the viscosity of the dispersion reaches a maximum value of 50 000 mPa.s.

3. Process according to either one of the preceding claims, in which the concentration of the hydratable compound is between 4.5 and 70% by weight, in particular between 5 and 65% by weight, especially between 7.5 and 65% by weight relative to the total weight of the dispersion.

4. Process according to any one of the preceding claims, in which the weight of dispersion brought into contact with the seeds is between 0.5 and 10% of the weight of the seeds.

5. Treated seeds, in particular coated seeds, obtained according to the process according to any one of Claims 1 to 4.
